# EUROPÄISCHE PATENTSCHRIFT

(11) **EP 3 964 405 B1**
(45) Veröffentlichungstag und Bekanntmachung des Hinweises auf die Patenterteilung: **06.05.2026**
(21) Anmeldenummer: 21201457.5
(22) Anmeldetag: 08.08.2019
(51) Int. Cl.: B60R 22/26, B60N 2/68, B60R 22/34

(54) **LASTTRAGENDES STRUKTURTEIL FÜR EINEN FAHRZEUGSITZ**
LOAD-BEARING STRUCTURAL PART FOR A VEHICLE SEAT
PARTIE STRUCTURALE PORTANTE POUR UN SIÈGE DE VÉHICULE

(30) Priorität: 08.08.2018 DE 102018213279
(43) Veröffentlichungstag der Anmeldung: 09.03.2022
(62) Teilanmeldung aus: 19758907.0
(73) Patentinhaber: Autoliv Development AB, 447 83 Vårgårda (SE)
(72) Erfinder: Clute, Günter, 25337 Elmshorn (DE); Jabusch, Ronald, 25336 Elmshorn (DE); Söhnchen, Arndt, 22765 Hamburg (DE)
(74) Vertreter: Müller Verweyen

(56) Entgegenhaltungen:
- EP-A1- 0 689 957
- DE-A1- 102012 022 159
- DE-A1- 19 616 016
- DE-A1- 3 636 912
- DE-C2- 19 616 016
- US-A- 5 671 976
- US-B1- 6 585 325

## Beschreibung

Die vorliegende Erfindung betrifft ein lasttragendes Strukturteil für einen Fahrzeugsitz mit den Merkmalen des Oberbegriffs von Anspruch 1.

Fahrzeugsitze mit Sicherheitsgurteinrichtungen sind z.B. in der Verwendung als Vordersitze in Cabriolets bekannt, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden müssen. Die Gurtaufroller selbst sind in ihrem Grundaufbau identisch mit Standardgurtaufrollern und werden nur mit verschiedenen speziell für den Einbau in die Rückenlehnen vorgesehenen Zusatzbaugruppen, wie z.B. einem sich selbst ausrichtenden Trägheitssensor versehen.

Die Gurtaufroller weisen als Grundbauteile einen lasttragenden Rahmen und eine in dem Rahmen drehbar gelagerte Gurtspule auf, auf welcher ein Sicherheitsgurt aufwickelbar ist. Der Rahmen dient neben der Lagerung der Gurtspule außerdem zur Befestigung der Gurtaufroller an der Sitzstruktur und ist dafür aus einem entsprechend dicken Stahlblech hergestellt, welches zu einem U-förmigen Rahmen gebogen ist.

Der Fahrzeugsitz weist in seinem Grundaufbau eine Sitzstruktur aus mehreren lasttragenden Strukturteilen auf, welche zur Befestigung des Fahrzeugsitzes an der Fahrzeugstruktur dienen.

Die Sitzstruktur ist zur Verbesserung des Sitzkomforts mit Federn und einer Polsterung versehen und dient außerdem zur Befestigung weiterer Bauteile wie z.B. verschiedene Sitzverstellmechanismen, einschließlich der zugehörigen Elektromotoren und weiterer Bauteile wie Heizeinrichtungen, Sensoren, Displays, Kopfstützen und dergleichen.

In modernen Fahrzeugen mit autonomen Fahrsystemen wird zunehmend eine vergrößerte Verstellbarkeit der Fahrzeugsitze in verschiedene Ausrichtungen und Stellungen gefordert, damit der Fahrzeuginsasse die durch das autonome Fahren gewonnenen Freiheiten z.B. zu einer vertieften Kommunikation mit den weiteren Insassen, zu verlängerten und intensiveren Ruhephasen oder auch zur Arbeit nutzen und den Fahrzeugsitz dazu entsprechend ausrichten kann. Dies hat zur Folge, dass die Sicherheitsgurteinrichtung und insbesondere der Gurtaufroller nicht mehr wie bisher an der Fahrzeugstruktur, sondern stattdessen am Fahrzeugsitz befestigt werden muss, wie dies z.B. auch schon bei den Vordersitzen in Cabriolets der Fall war.

Aus der Druckschrift DE 195 16 016 A1 ist zum Beispiel ein Flugzeugsitz bekannt, in dem eine Halterung für einen mit einer Aufrollmechanik versehenen Schultergurt einer Sicherheitsgurteinrichtung vorgesehen ist. Die Halterung umfasst einen Querholm mit einem U-Profil.

Ferner ist aus der Druckschrift EP 0 689 957 A1 ein Strukturteil bekannt, welches einen Hohlraum aufweist, in dem ein Gurtaufroller angeordnet ist, wobei das Strukturteil an seinen Enden jeweils einen Befestigungsvorsprung aufweist, mit denen das Strukturteil an jeweils einer Längsstrebe einer Rückenlehne der Sitzstruktur befestigbar ist, wobei das Strukturteil die Stirnseiten der Längsstreben mit den Befestigungsvorsprüngen umfasst.

Ferner sind aus den Druckschriften DE 36 36 912 A1, US 6,585,325 B1 und US 5,671,976 weitere Fahrzeugsitze bekannt, welche einen sitzintegrierten Gurtaufroller aufweisen.

Vor diesem Hintergrund liegt der Erfindung die Aufgabe zugrunde, ein möglichst platzsparendes und formstabiles lasttragendes Strukturteil mit einem darin angeordneten Gurtaufroller bereitzustellen.

Zur Lösung der Aufgabe wird ein lasttragendes Strukturteil für einen Fahrzeugsitz mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird nach Anspruch 1 ein lasttragendes Strukturteil einer Sitzstruktur eines Fahrzeugsitzes vorgeschlagen, wobei das Strukturteil einen Hohlraum aufweist, in dem ein Gurtaufroller angeordnet ist, wobei das Strukturteil an seinen Enden jeweils einen nach unten vorstehenden und seitlich abgewinkelten Befestigungsvorsprung aufweist, mit denen das Strukturteil an jeweils einer Längsstrebe einer Rückenlehne der Sitzstruktur befestigbar ist, wobei das Strukturteil die schlanken rechteckprofilförmigen Stirnseiten der Längsstreben mit den Befestigungsvorsprüngen umfasst, wobei das lasttragende Strukturteil eine im Querschnitt U-förmige, einseitig offene Profilschiene mit zwei gegenüberliegenden, sich von einer Basisfläche erstreckenden Schenkeln umfasst, und der Hohlraum durch den Zwischenraum zwischen den gegenüber liegenden Schenkeln gebildet ist, wobei die Profilschiene zu den Außenseiten hin jeweils durch eine Halteplatte verschlossen ist, an welchen jeweils Befestigungsansätze in Form der Befestigungsvorsprünge zur Befestigung an der Sitzstruktur vorgesehen sind, wobei der Gurtaufroller an der Halteplatte gelagert ist. Durch die vorgeschlagene Lösung kann der Gurtaufroller in einer platzsparenden Bauweise an dem Fahrzeugsitz angeordnet werden, bzw. der Fahrzeugsitz kann entsprechend in Bezug zu der Anordnung des Gurtaufrollers kompakter ausgeführt werden. Dazu wird eines der Strukturteile gezielt mit einem Hohlraum zur Aufnahme des Gurtaufrollers versehen, wobei der Hohlraum in der Form und Lage gezielt an die Außenform des Gurtaufrollers und dessen Funktion z.B. hinsichtlich der Herausführung des Sicherheitsgurtes angepasst sein kann. Dabei kann das lasttragende Strukturteil auch den bisher erforderlichen Rahmen des Gurtaufrollers ersetzen, indem die Gurtspule des Gurtaufrollers direkt an dem lasttragenden Strukturteil oder an einem fest mit diesem verbundenen Teil gelagert ist. Ferner können die beim Rückhaltefall auftretenden Zugkräfte nunmehr unmittelbar in das Strukturteil eingeleitet werden, wobei das lasttragende Strukturteil durch die Formgebung des Hohlraumes gezielt zur Aufnahme der Rückhaltekräfte ausgelegt werden kann. Da das Strukturteil der Sitzstruktur bereits ohnehin zur Aufnahme von Sitzkräften und weiteren auf den Fahrzeugsitz einwirkenden Kräften ausgelegt ist, weist dieses bereits eine ausreichend große Festigkeit auf, welche durch die vorgeschlagene Lösung auch zur Aufnahme der von dem Sicherheitsgurt ausgeübten Rückhaltekräfte genutzt wird. Ferner weist das lasttragende Strukturteil aufgrund des vorgesehenen Hohlraumes und der dadurch gegebenen dreidimensionalen Gestaltung mit der in einem Winkel zueinander stehenden Wandungen eine besonders hohe Verwindungs- und Biegesteifigkeit auf, was wiederum für die Lastaufnahme und die Rückhaltung des Insassen im Unfall von Vorteil ist. Durch den Befestigungsvorsprung kann das Strukturteil ferner so ausgelegt werden, dass es die beiden Längsstreben miteinander verbindet und dadurch die Sitzstruktur zu einem Rahmen versteift.

Dabei ist das lasttragende Strukturteil durch eine im Querschnitt U-förmige, einseitig offene Profilschiene mit zwei gegenüberliegenden, sich von einer Basisfläche erstreckenden Schenkeln gebildet ist, und der Hohlraum ist durch den Zwischenraum zwischen den gegenüber liegenden Schenkeln gebildet. Der Vorteil der vorgeschlagenen Lösung ist darin zu sehen, dass das Strukturteil erstens sehr kostengünstig als Mehrfachumformteil vorgefertigt oder auch als Halbzeug bezogen werden kann. Zweitens weist die U-förmige Profilschiene durch die freie Seite zwischen den Schenkeln eine sehr große Zugangsöffnung auf. Außerdem weist die Profilschiene drei durch die Innenseiten der Schenkel und der Basisfläche gebildete großflächige Anlage- und Befestigungsflächen auf. Außerdem weist die U-förmige Profilschiene eine durch die Form bedingte große Verwindungs- und Biegesteifigkeit auf, welche zur Aufnahme der im Rückhaltefall wirkenden Kräfte von Vorteil ist.

Weiter wird vorgeschlagen, dass die Profilschiene an wenigstens einer ihrer Stirnseiten eine Haltplatte aufweist, welche wenigstens einen Befestigungsansatz zur Befestigung an einer Sitzstruktur aufweist. Die Halteplatte dient sowohl der Versteifung der Profilschiene bzw. des Strukturteils als auch zur Befestigung an der Sitzstruktur indem an der Halteplatte ein entsprechender Befestigungsansatz vorgesehen ist, welcher in seiner Form und Ausrichtung speziell zur Befestigung an einem entsprechenden Befestigungspunkt an der Sitzstruktur ausgebildet ist.

Dabei ist der Gurtaufroller an der Halteplatte gelagert, so dass die Lagerkräfte und auch die im Rückhaltefall wirkenden Zugkräfte unmittelbar über das Halteteil in die Sitzstruktur eingeleitet werden und die Profilschiene entsprechend entlastet wird.

Das erfindungsgemäße lasttragende Strukturteil kann derart ausgebildet sein, dass sich die mögliche Lastaufnahme durch eine von außen oder innen angreifende Kraft entlang der Längsausrichtung des Strukturteils ändert. Diese kann z.B. über das Gurtband oder den Insassen auf dem Sitz von außen auf das Strukturteil wirken oder durch z.B. ein von einem Gurtstraffer erzeugtes Drehmoment von innen auf das Strukturteil wirken. Bevorzugt kann die mögliche Lastaufnahme ausgehend vom Gurtbandaustritt entlang des Strukturteils abnehmen. Dazu können im Bereich des Gurtbandaustritts oder des daran angrenzenden Bereichs mehr Wandungen vorhanden sein als im dem Gurtbandaustritt abgewandten Bereich.

Weiter wird vorgeschlagen, dass der Hohlraum eine Öffnung aufweist, durch die ein auf dem Gurtaufroller aufwickelbarer Sicherheitsgurt herausgeführt wird. Die Öffnung dient dem Herausführen des Sicherheitsgurtes und kann zusätzlich auch zum Einbau genutzt werden, wobei in dem letzteren Fall zusätzlich ein die Öffnung nach dem Einbau des Gurtaufrollers verkleinerndes Einsatzteil vorgesehen sein kann.

Weiter wird vorgeschlagen, dass die Öffnung durch einen Ausschnitt in der Profilschiene gebildet ist. Der Ausschnitt ist in einer Wandung vorzugsweise in der mittleren Wandung also der Basisfläche angeordnet, so dass der Sicherheitsgurt durch die Profilschiene ausgezogen wird. Der Gurtaufroller stützt sich dabei in der Profilschiene und zwar an einer von der Auszugsrichtung des Sicherheitsgurtes entgegengesetzten Seite der Profilschiene ab, so dass die Reaktionskräfte beim Auszug des Sicherheitsgurtes bzw. bei der Rückhaltung des Insassen ideal von der Profilschiene aufgenommen und in die Sitzstruktur weitergeleitet werden. Der Ausschnitt in der Profilschiene kann dabei sowohl in der Geometrie als schmaler Schlitz an den Sicherheitsgurt angepasst sein und außerdem mit entsprechenden Rundungen oder Einsatzteilen zur Vergrößerung der Radien der Ränder versehen sein, so dass der Sicherheitsgurt in einer möglichen Anlage möglichst gering belastet wird.

Weiter wird vorgeschlagen, dass die Schenkel der Profilschiene ausgehend von der Basisfläche eine unterschiedliche Höhe aufweisen. Durch die vorgeschlagene Weiterentwicklung kann die Öffnungsweite der Öffnung in der Profilschiene vergrößert werden, indem der Abstand der Randseiten der Schenkel durch die unterschiedliche Höhe im Vergleich zu dem Abstand der Randseiten bei identischer Höhe vergrößert wird.

Weiter wird vorgeschlagen, dass der Schenkel mit der kleineren Höhe in der vorgesehenen Einbaustellung des Strukturteils einer Sitzfläche des Fahrzeugsitzes zugewandt ist. Durch die vorgeschlagene Weiterentwicklung ist die vergrößerte Öffnung der Sitzfläche also zu der Seite des zurückzuhaltenden Insassen zugewandt, zu der auch der Sicherheitsgurt herausgeführt wird. Damit kann der Gurtaufroller derart in dem Hohlraum angeordnet werden, dass er einseitig von einem der Schenkel überragt und dadurch geschützt wird, während der Sicherheitsgurt tangential von dem Gurtaufroller über den Schenkel mit der geringeren Höhe herausgeführt werden kann.

Weiter wird vorgeschlagen, dass der Gurtaufroller in einem sich zwischen den Schenkeln der Profilschiene abstützen Steg gelagert ist. Der Steg kann neben der Lagerung des Gurtaufrollers zusätzlich zu einer Versteifung der Profilschiene genutzt werden, indem der Steg verhindert, dass sich die beiden Schenkel bei einwirkenden Kräften zueinander verbiegen. Der Steg selbst ist hinsichtlich seiner eigentlichen Funktion zur Lagerung der Gurtwelle speziell geformt, bemessen und in der Profilschiene angeordnet. Ferner kann der Steg auch zusätzlich zur Aufnahme weiterer Funktionsteile, wie z.B. Sensoren, Aktuatoren oder auch Blockiereinrichtungen dienen. Die Stege können dann auch als Funktionswände verstanden werden.

Weiter wird vorgeschlagen, dass wenigstens ein zweiter sich zwischen den Schenkeln der Profilschiene abstützender Steg vorgesehen ist, welcher zu dem ersten Steg beabstandet ist. Durch den zweiten Steg kann die Verformungssteifigkeit der Schenkel in der Bewegung zueinander als auch die Verwindungssteifigkeit der Profilschiene und damit die Formstabilität des Strukturteils im Rückhaltefall verbessert werden. Außerdem kann der zweite Steg zusätzlich zu einer weiteren Lagerung des Gurtaufrollers und/oder zu einer Lagerung von weiteren mit dem Gurtaufroller zusammenwirkenden Baugruppen genutzt werden.

Weiter wird vorgeschlagen, dass der Gurtaufroller eine um eine Drehachse drehbar gelagerte Gurtspule aufweist, und der Gurtaufroller derart angeordnet ist, dass die Drehachse der Gurtspule parallel zu der Längsrichtung der Profilschiene ausgerichtet ist. Dadurch kann eine besonders kompakte und bauraumsparende Anordnung des Gurtaufrollers verwirklicht werden. Sofern die Stege senkrecht zu der Profilschiene ausgerichtet sind, kann die Lagerung dadurch besonders einfach realisiert werden, indem die Drehachse der Gurtspule des Gurtaufrollers damit auch senkrecht zu den zur Lagerung vorgesehenen Stegen ausgerichtet ist.

Weiter wird vorgeschlagen, dass die Sitzstruktur zwei parallel und beabstandet zueinander verlaufende Längsstreben umfasst, welche in Längsrichtung eines eine Rückenlehne bildenden Abschnittes der Sitzstruktur verlaufen, und dass das lasttragende Strukturteil mit dem Hohlraum und dem darin angeordneten Gurtaufroller die beiden Längsstreben an ihren Enden zu einer stabilen Randseite der Rückenlehne miteinander verbindet. Das Strukturteil und die Längsstreben bilden damit einen dreiseitigen, stabilen Rahmen der Rückenlehne, welcher der Stützung des Oberkörpers des Insassen dient und durch die erfindungsgemäße Lösung zusätzlich zur Aufnahme der Rückhaltekräfte im Unfall genutzt wird.

Weiter wird vorgeschlagen, dass das lasttragende Strukturteil derart angeordnet ist, dass der Hohlraum zu einer Außenseite des Fahrzeugsitzes hin geöffnet ist. Durch die vorgeschlagene Ausrichtung des Strukturteils kann der auf dem Gurtaufroller aufgewickelte Sicherheitsgurt vereinfacht aus dem Fahrzeugsitz hin zu dem auf diesem sitzenden Insassen geführt werden.

Weiter wird vorgeschlagen, dass die Profilschiene durch ein Abdeckteil verschlossen ist, welches die freien stirnseitigen Ränder der Schenkel überdeckt. Das Abdeckteil verschließt die Profilschiene zu einen in alle vier Radialrichtungen geschlossenen Profil und versteift dadurch die Profilschiene zusätzlich. Ferner verschließt das Abdeckteil den in der Profilschiene vorhandenen Hohlraum, so dass der darin angeordnete Gurtaufroller mit seinen zusätzlichen Bauteilen zur Außenseite hin vor äußeren mechanischen Einwirkungen geschützt ist.

Weiter wird vorgeschlagen, dass das Abdeckteil mit wenigstens einem freien Rand eines Schenkels über ein Scharnier schwenkbar verbunden ist. Die durch das Scharnier geschaffenen Verbindung ermöglicht eine vereinfachte positionsgenaue Befestigung der Abdeckplatte, indem die Abdeckplatte zuerst über das Scharnier schwenkbar mit einem Rand eines Schenkels der Profilschiene verbunden wird und dann unter Ausführung einer Schwenkbewegung an den anderen Rand des anderen Schenkels herangeschwenkt wird, wobei sich die Abdeckplatte dabei in der Verbindung über das Scharnier an dem Rand des gegenüber liegenden Schenkels abstützt.

Ferner kann an der Außenseite der Halteplatte bevorzugt eine Federkassette des Gurtaufrollers gehalten sein. In der Federkassette ist eine Triebfeder gehalten, welche sich mit einem Ende über das Gehäuse der Federkassette an dem Halteteil abstützt und mit dem anderen Ende mit einer Gurtwelle des Gurtaufroller verbunden ist, so dass die Gurtwelle in Aufwickelrichtung federvorgespannt ist. Das Halteteil wird dadurch zusätzlich zur Abstützung der Triebfeder genutzt. Die Federkassette ist ferner bewusst an der Außenseite der Halteplatte angeordnet, so dass in der Profilschiene kein zusätzlicher Bauraum für die Federkassette vorgesehen werden muss.

Das Strukturteil kann bevorzugt aus einen Metallblech gebildet sein, so dass es erstens kostengünstig durch einen plastischen Biege- und Umformprozess in einer Großserie herzustellen ist und zweitens aus einem für die Anforderungen der Rückhaltung des Insassen ausreichend stabilen Werkstoff hergestellt ist.

Alternativ kann das Strukturteil auch aus einem faserverstärkten Kunststoffteil gebildet sein. Moderne faserverstärkte Kunststoffe wie GFK oder CFK weisen eine ähnlich hohe Festigkeit wie Metall oder Stahl auf, sind aber deutlich leichter. Außerdem können sie sehr einfach in komplexen Formen in entsprechenden Formwerkzeugen hergestellt werden, und es entfällt ein entsprechend aufwändiger Nachbearbeitungsprozess.

Weiter wird vorgeschlagen, dass das Strukturteil wenigstens im Bereich des Hohlraumes eine oder mehrere Versteifungsrippen aufweist. Durch die Versteifungsrippen kann der Verformungswiderstand des Strukturteils sehr effizient mit einem nur geringfügig höheren Gewicht des Strukturteils erhöht werden. Dabei können die Rippen als reine Verdickungen auf der Oberfläche z.B. durch Auftragsschweißen oder Drucken hergestellt werden, oder sie können den Hohlraum des Strukturteils auch wandartig in verschiedene Abschnitte unterteilen, indem sie sich von einer Wandung des Hohlraumes bis zu einer gegenüberliegenden Wandung des Hohlraumes erstrecken.

Weiter wird vorgeschlagen, dass das Strukturteil zwei treppenförmig versetzt angeordnete Widerlager zur Befestigung an der Sitzstruktur aufweist. Durch die treppenförmig versetzt angeordneten Widerlager stützt sich das Strukturteil in zwei zueinander versetzt angeordneten Ebenen an der Sitzstruktur und zwar sowohl in der Höhe als auch in der Breite des Strukturteiles an der Sitzstruktur versetzt ab.

Dabei kann eines der Widerlager bevorzugt als Schwenklager und das andere Widerlager als Befestigungsflansch ausgebildet sein. Der Befestigungsvorgang erfolgt dann, indem das Strukturteil zuerst in das als Schwenklager ausgebildete Widerlager eingeführt wird und dann unter Ausführung einer Schwenkbewegung an das andere als Befestigungsflansch ausgebildete Widerlager herangeschwenkt und schließlich an diesem befestigt wird.

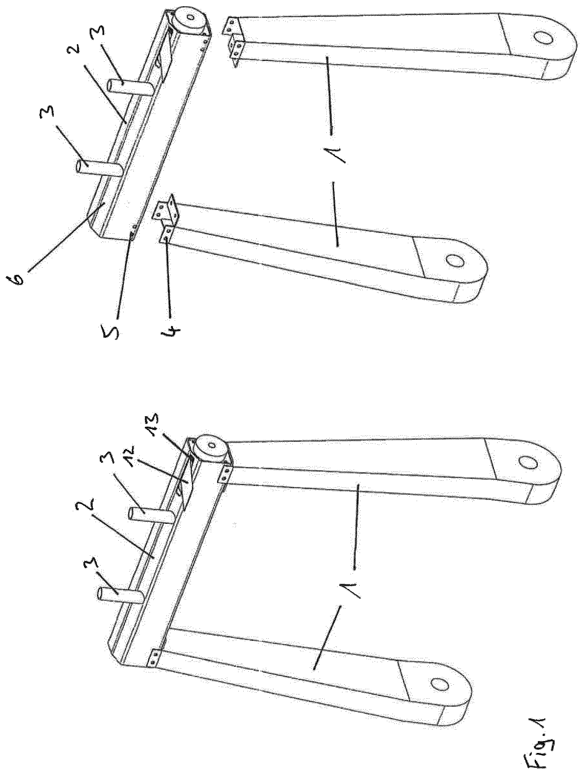

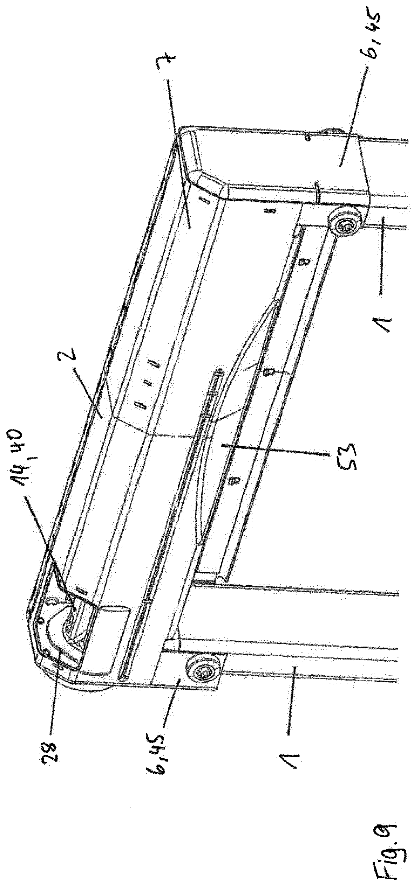

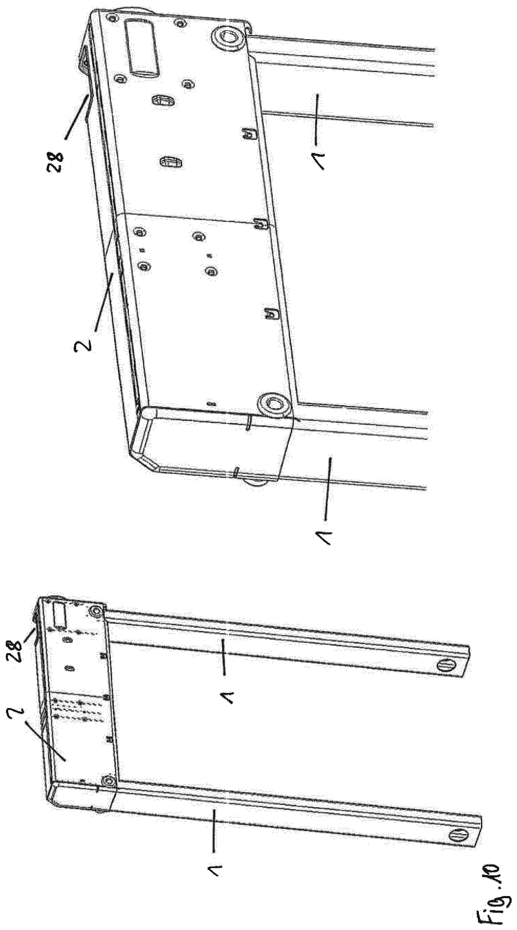

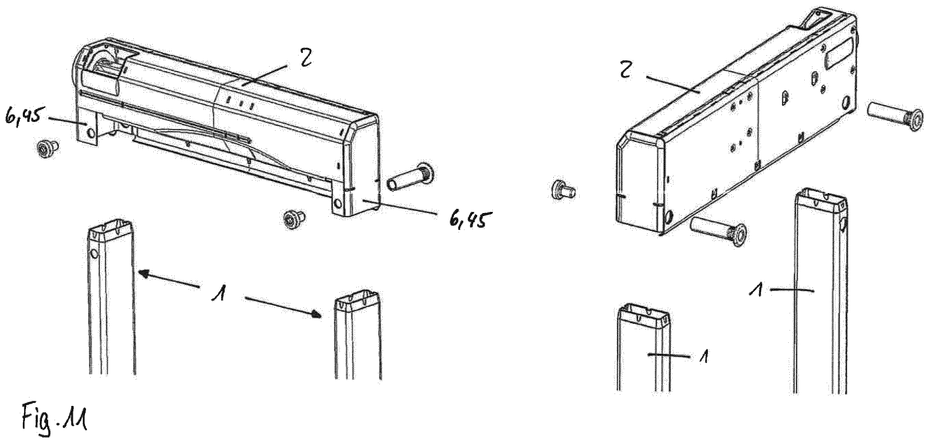

Das lasttragende Strukturteil wird im Folgenden anhand bevorzugter Ausführungsformen unter Bezugnahme auf die beigefügten Figuren erläutert, wobei in den Figuren 1 bis 8 ein lasttragendes Strukturteil in verschiedenen Ausführungen gezeigt ist, welche nicht unter den Anspruch 1 fallen, während die Figuren 9 bis 15 ein erfindungsgemäßes Strukturteil zeigen. Dabei zeigt
- Fig. 1: zwei Längsstreben eines Fahrzeugsitzes mit einem erfindungsgemäßen lasttragenden Strukturteil; und
- Fig. 2: das lasttragende Strukturteil mit einem Hohlraum und einem darin angeordneten Gurtaufroller; und
- Fig. 3: eine Schnittdarstellung des lasttragenden Strukturteils mit dem Hohlraum und dem darin angeordneten Gurtaufroller; und
- Fig. 4: das lasttragende Strukturteil in einer zweiten Ausführungsform.

In der Figur 1 ist ein Teil einer Sitzstruktur eines Fahrzeugsitzes für ein Kraftfahrzeug zu erkennen, welcher die Rückenlehne des Fahrzeugsitzes bildet. Die Sitzstruktur bildet den formstabilen "Kern" des Fahrzeugsitzes und wird zusätzlich mit Federn und/oder einer Polsterung zur Verbesserung des Sitzkomforts versehen. Ferner sind an der Sitzstruktur weitere Funktionsbauteile wie z.B. Sitzverstellmechanismen, eine Kopfstütze, elektronische Geräte wie z.B. Displays, oder auch Heizeinrichtungen vorgesehen.

Die Sitzstruktur umfasst einen Verbund aus mehreren lasttragende Strukturteilen 2, wovon hier zwei durch parallel zueinander ausgerichtete Längsstreben 1 gebildet sind. Die oberen Enden der Längsstreben 1 sind durch ein erfindungsgemäß ausgebildetes lasttragendes Strukturteil 2 zu einer formstabilen Oberseite der Rückenlehne miteinander verbunden. Zur Verbindung der Längsstreben 1 sind an diesen hochstehende Laschen 4 mit Befestigungsöffnungen vorgesehen, und an dem Strukturteil 2 sind ebenfalls Befestigungsöffnungen vorgesehen, durch welche die Teile entweder durch Schrauben oder Niete miteinander verbunden werden. Ferner ist an dem Strukturteil 2 eine Kopfstützenhalterung 3 in Form von zwei hochstehenden Stangen vorgesehen.

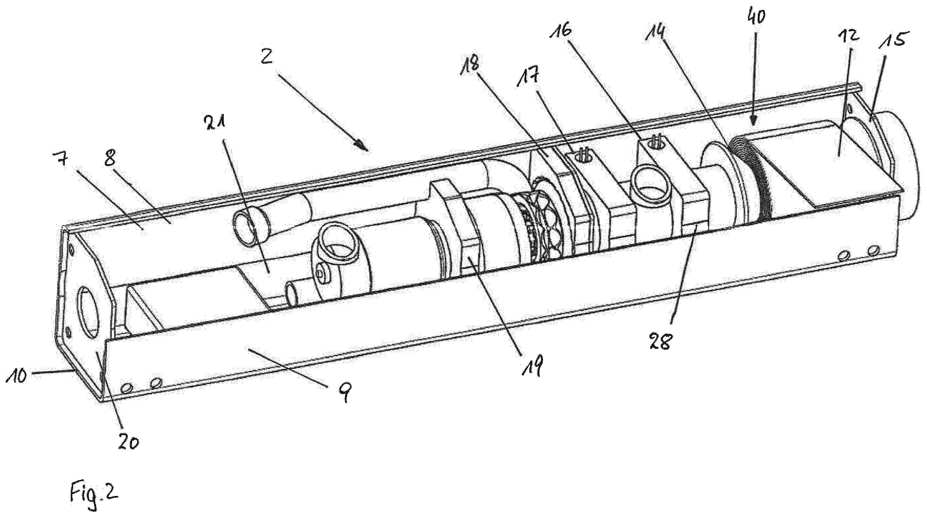

In der Figur 2 ist das lasttragende Strukturteil 2 in einer vergrößerten Darstellung, als Einzelteil zu erkennen. Das lasttragende Strukturteil 2 umfasst als Grundbauteil eine im Querschnitt U-förmige Profilschiene 7, mit einer Basisfläche 10 und zwei gegenüber liegenden, parallel zueinander verlaufenden, von der Basisfläche 10 hochstehenden wandförmigen Schenkeln 8 und 9. Die Profilschiene 7 weist eine zwischen den Randseiten der Schenkel 8 und 9 gebildete Öffnung 28 auf, welche durch ein in der Figur 1 zu erkennendes Einsatzteil 6 verschlossen ist, dass aber in der Figur 2 zur besseren Erkennbarkeit des Strukturteils 2 weggelassen wurde. Das Einsatzteil 6 ist durch eine Platte mit einer an die Form der Öffnung 28 angepassten Formgebung gebildet und weist einen Schlitz 13 auf, durch den ein nachfolgend noch näher beschriebener Sicherheitsgurt 12 aus einem Hohlraum 21 zwischen den Schenkeln 8 und 9 zur Außenseite hin auf einen zurückzuhaltenden Insassen auf dem Fahrzeugsitz geführt ist. Das Einsatzteil 6 verschließt bzw. verkleinert die Öffnung 28 bis auf den vorgesehenen Schlitz 13, so dass der Hohlraum 21 zur Außenseite hin verschlossen ist, und ein darin vorgesehener Gurtaufroller 40 vor mechanischen Einwirkungen geschützt ist. Die Stirnseiten der Profilschiene 7 sind jeweils durch einen Steg 15 und 20 verschlossen.

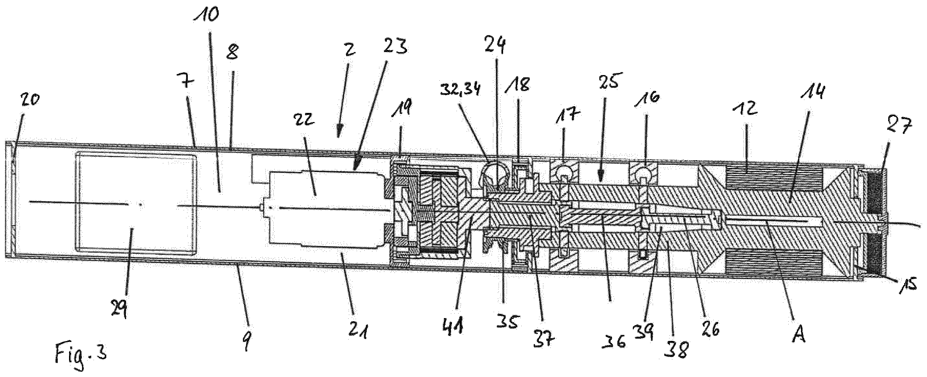

In dem Hohlraum 21 des lasttragenden Strukturteils 2 ist der Gurtaufroller 40 mit einer Gurtspule 14 und dem darauf aufwickelbaren Sicherheitsgurt 12 angeordnet, welcher in der Figur 3 in Schnittdarstellung zu erkennen ist. Der Gurtaufroller 40 weist neben der Gurtspule 14 eine Kraftbegrenzungseinrichtung 25 mit mehreren Torsionsstäben 26, einen pyrotechnischen irreversiblen Gurtstraffer 24 und einen reversiblen elektromotorischen Gurtstraffer 23 in einer koaxialen Anordnung zu der Drehachse der Gurtspule 14 auf. Die Außenabmessungen der Gurtspule 14 mit dem darauf maximal aufgewickelten Sicherheitsgurt 12, sowie die Außenabmessungen der Kraftbegrenzungseinrichtung 25, des pyrotechnischen Gurtstraffers 24 und des elektromotorischen Gurtstraffers 23 sind in der Querschnittsfläche senkrecht zu der Drehachse der Gurtspule 14 so gewählt, dass sie nicht größer als die Abmessungen des Hohlraumes 21 senkrecht zu der Längserstreckung der Profilschiene 7 sind, so dass sie in dem Hohlraum 21 der Profilschiene 7 angeordnet werden können.

In der Profilschiene 7 sind mehrere Stege 15,16,17,18,19 und 20 in Form von senkrecht zu der Längserstreckung der Profilschiene 7 ausgerichteten Wandabschnitten vorgesehen, welche sich von einem der Schenkel 8 oder 9 bis zu dem jeweils anderen Schenkel 8 oder 9 erstrecken und mit diesen verbunden sind. Ferner können sich die Stege 15,16,17,18,19 und 20 bis zu der Basisfläche 10 der Profilschiene 7 erstrecken und damit die gesamte Querschnittsfläche der Profilschiene 7 ausfüllen. Die Stege 15,16,17,18,19 und 20 weisen jeweils eine oder mehrere Öffnungen oder Ansätze auf, in denen der Gurtaufroller bzw. Teile davon wie z.B. die Gurtspule 14 gelagert, befestigt und/oder hindurchgeführt sind. Ferner kann z.B. einer der Stege 15,16,17,18,19 und 20 auch eine Verzahnung oder andersartige Blockiergestaltung aufweisen, in denen die Gurtspule 14 oder andere Teile des Gurtaufrollers blockierbar sind. Außerdem können die Stege 15,16,17,18,19 und 20 auch zusätzliche Hohlräume zur Aufnahme von weiteren Bauteilen des Gurtaufrollers wie z.B. pyrotechnische Treibsätze für den pyrotechnischen Gurtstraffer 24, elektronische Bauteile wie z.B. Sensoren, elektronische Steuereinheiten oder Speichereinheiten aufweisen. Sofern die Stege 15,16,17,18,19 und 20 sich von einem der Schenkel 8 oder 9 bis zu dem jeweils anderen Schenkel 8 oder 9 erstrecken, können die Stege 15,16,17,18,19 und 20 zusätzlich zur Versteifung der Profilschiene 7 genutzt werden, was wiederum für die Lastaufnahme und die Formstabilität der Profilschiene 7 im Rückhaltefall des Insassen von Vorteil ist. Die Bauteile des Gurtaufrollers sind bewusst koaxial und hintereinander angeordnet, so dass die Baugruppe bewusst kleinere radiale Abmessungen aufweist und damit auch in einem schmalen länglichen Hohlraum 21 der Profilschiene 7 angeordnet werden kann. Dadurch kann die Profilschiene 7 und das lasttragende Strukturteil entsprechend schmal und länglich ausgebildet werden, wie dies insbesondere zur Verwendung des erfindungsgemäßen, lasttragenden Strukturteils in einer Sitzstruktur des Fahrzeugsitzes von Vorteil ist.

In der Figur 3 ist das lasttragende Strukturteil im Schnitt durch die Profilschiene 7 und den Gurtaufroller zu erkennen. Die im Querschnitt U-förmige Profilschiene 7 weist die in dieser Darstellung dem Betrachter zugewandten Schenkel 8 und 9 und eine Basisfläche 10 auf. Zwischen den Schenkeln 8 und 9 ist der Hohlraum 21 vorgesehen, in dem der Gurtaufroller angeordnet ist. Der Hohlraum 21 ist durch sechs Stege 15,16,17,18,19 und 20 unterteilt, wobei die beiden äußeren Stege 15 und 20 den Hohlraum 21 zur Außenseite an den beiden Enden der Profilschiene 7 verschließen.

An dem rechten Steg 15 ist eine Federkassette mit einer Triebfeder 27 gehalten, welche ihrerseits mit der Gurtspule 14 verbunden ist und dadurch die Gurtspule 14 in Aufwickelrichtung des darauf aufgewickelten Sicherheitsgurtes 12 vorspannt. Die Gurtspule 14 ist an ihrem in die Profilschiene 7 hineinragenden Ende mit einer Kraftbegrenzungseinrichtung 25 versehen, welche durch einen koaxial zu der Gurtspule 14 angeordneten, rohrförmigen Fortsatz 38, drei in Reihe angeordneten Torsionsstäben 26, 36 und 37 und ein drehfest gegenüber der Profilschiene 7 blockierbares Blockierteil 41 gebildet ist. In der vorliegenden Ausführungsform sind drei Torsionsstäbe 26, 36 und 37 vorgesehen, welche jeweils mit einem Ende mit der Gurtspule 14 bzw. mit dem rohrförmigen Fortsatz 38 mittelbar oder unmittelbar drehfest verbunden sind und mit dem jeweils anderen Ende durch eine in jeweils einem der Stege 16 oder 17 vorgesehene Schalteinrichtung drehfest gegenüber der Profilschiene 7 blockierbar oder von dieser lösbar sind. Damit können die Torsionsstäbe 26, 36 und 37 einzeln oder in Kombination aktiviert werden, wodurch die Rückhaltkräfte auf unterschiedlichen Kraftbegrenzungsniveaus bzw. ein stufenförmiger Kraftbegrenzungsverlauf realisiert werden können. Das Blockierteil 41 kann durch einen fahrzeugsensitiv und/oder gurtbandsensitiv ansteuerbare Blockiereinrichtung in Auszugsrichtung des Sicherheitsgurtes 12 blockierbar sein, wodurch die Kraftbegrenzungseinrichtung 25 blockiert wird, so dass sie nachfolgend bei einem Überschreiten des durch die Kraftbegrenzungseinrichtung 25 selbst definierten Kraftbegrenzungsniveau selbsttätig aktiviert wird. Ferner ist ein pyrotechnischer, irreversibler Gurtstraffer 24 mit einem koaxial zu der Gurtspule 14 angeordneten Antriebsrad 35 vorgesehen, welcher die Gurtspule 14 bei einer Aktivierung über eine zwischengeschaltete Kupplung in Aufwickelrichtung antreibt und den Sicherheitsgurt 12 strafft. Außerdem ist ein reversibler Gurtstraffer 23 mit einem Elektromotor 22 vorgesehen, welcher die Gurtspule 14 bei einer Aktivierung über eine zweite oder auch dieselbe Kupplung wie der pyrotechnische Gurtstraffer 24 in Aufwickelrichtung antreibt und dadurch den Sicherheitsgurt 12 strafft. Der Elektromotor 22 ist ebenfalls koaxial zu der Gurtspule 14 und damit auch zu der Kraftbegrenzungseinrichtung 25 und zu dem pyrotechnischen Gurtstraffer 24 angeordnet. Ferner ist in der Profilschiene 7 des lasttragenden Strukturteils 2 eine elektronische Steuereinheit 29 vorgesehen, welche zur Ansteuerung des Gurtaufrollers 40 und/oder weiterer Bauteile dienen kann. Das lasttragende Strukturteil 2 ist ein Grundbauteil der Sitzstruktur, indem es weitere Teile der Sitzstruktur wie z.B. die in der Figur 1 zu erkennenden Längsstreben 1 miteinander verbindet. Das Strukturteil 2 hat damit die Aufgabe die Sitzstruktur zu bilden und dient durch den vorgesehenen Hohlraum 21 zusätzlich zur Aufnahme des Gurtaufrollers 40. Das lasttragende Strukturteil 2 kann als Baugruppe mit dem Gurtaufroller 40 vormontiert und dann bei der Fertigung der Sitzstruktur bzw. des Fahrzeugsitzes als eine Baueinheit endmontiert werden.

Die Profilschiene 7 bildet dabei das Grundbauteil des lasttragendes Strukturteils 2 und ist entsprechend der zu verwirklichenden Verbindung der weiteren Strukturteile in der Sitzstruktur geformt und bemessen. Die Profilschiene 7 kann den bisher erforderlichen Rahmen des Gurtaufrollers 40 ersetzen, indem sie sowohl zur Lagerung des Gurtaufrollers 40 als auch zur Befestigung des Gurtaufrollers 40 an dem Fahrzeugsitz dient.

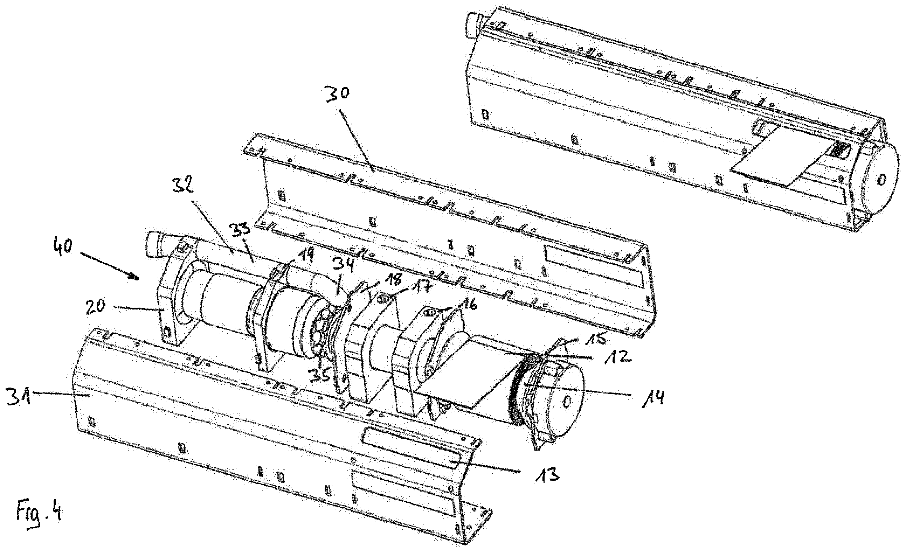

Der Gurtaufroller 40 ist modulartig mit der Gurtspule 14 und den weiteren Baugruppen, nämlich der Kraftbegrenzungseinrichtung 25, dem pyrotechnischen Gurtstraffer 24 und dem reversiblen Gurtstraffer 23 in einer koaxialen Reihenanordnung ausgebildet. Dabei sind die Baugruppen bewusst so ausgebildet, dass ihre radialen Außenabmessungen die Abmessung des Gurtwickels auf der Gurtspule 14 bei maximal aufgewickelten Sicherheitsgurt 12 nicht überragen, wie in der Figur 3 zu erkennen ist. Der maximale Außendurchmesser des Gurtaufrollers 40 ist damit durch den Durchmesser des Gurtwickels bei maximal aufgewickeltem Sicherheitsgurt 12 vorgegeben. Da der Gurtwickel im Querschnitt kreisförmig ausgebildet ist, und der Hohlraum 21 in der Profilschiene 7 oder dem Gehäuse in der Figur 4 im Querschnitt viereckig ist, sollen unter den maximalen Abmessungen, welche durch den Gurtwickel vorgegeben werden, auch ein im Querschnitt viereckiger Hohlraum mit den Seitenlängen verstanden werden, welche dem Durchmesser des Gurtwickels oder geringfügig größer entsprechen.

Die Stege 15,16,17,18,19 und 20 können neben ihrer Lagerfunktion zusätzlich oder auch alternativ durch das Vorsehen entsprechender Aufnahmen und einer Anordnung von verschiedenen Funktionseinheiten in oder an den Aufnahmen auch als Funktionswände verstanden werden. Damit sie ihre Lagerfunktion erfüllen können, stützen sich die Stege 15,16,17,18,19 und 20 bevorzugt zwischen den Schenkeln 8 und 9 und der Basisfläche 10 der Profilschiene 7 oder zwischen den in der Figur 4 zu erkennenden Gehäuseteilen 30 und 31 drehfest ab.

Das in der Figur 4 zu erkennende alternative Ausführungsbeispiel unterscheidet sich damit von dem Ausführungsbeispiel der Figur 3 dadurch, dass der Gurtaufroller 40 statt mit einer Profilschiene 7 hier mit einem zweiteiligen Gehäuse mit zwei Gehäuseteilen 30 und 31 versehen ist. Die Gehäuseteile 30 und 31 sind jeweils U-förmig ausgeführt und umfassen die Gurtspule 14 und die weiteren Baugruppen, einschließlich der Stege 15,16,17,18,19 und 20 in der montierten Stellung zur Außenseite hin, wie in der rechten oberen Darstellung der Figur 4 zu erkennen ist. Die Gehäuseteile 30 und 31 bilden in der zusammengesetzten Stellung einen im Querschnitt viereckigen länglichen Hohlraum 21. Da die Gurtspule 14 mit dem darauf aufgewickelten Sicherheitsgurt 12 und die weiteren Baugruppen im Querschnitt kreisförmig ausgebildet sind, sind zwischen dem Gurtwickel der Gurtspule 14, den Baugruppen und dem Gehäuse in den Ecken jeweils ein länglicher im Querschnitt in etwa dreieckförmiger Freiraum vorgesehen, welcher hier zur Anordnung des Strafferantriebsrohres 32 genutzt wird. Das Strafferantriebsrohr 32 dient zur Führung einer Antriebseinrichtung, wie z.B. einer Kette aus lose aneinander anliegenden Massekörpern, oder eines elastischen Antriebsstranges, welche bzw. welcher bei einer Aktivierung des pyrotechnischen Gurtstraffers beschleunigt und dadurch in Antriebsverbindung mit dem Antriebsrad 35 gebracht wird. Das Antriebsrad 35 und die Gurtspule werden dadurch nachfolgend zu einer Drehbewegung in Aufwickelrichtung des Sicherheitsgurtes 12 angetrieben. Das Strafferantriebsrohr 32 weist einen Linearabschnitt 33 und einen Krümmungsabschnitt 34 auf und ist derart ausgerichtet und angeordnet, dass es mit dem Linearabschnitt 33 parallel zu der Drehachse der Gurtspule 14 und des Antriebsrades 35 ausgerichtet ist und mit dem Krümmungsabschnitt 34 tangential auf den Außenumfang des Antriebsrades 35 gerichtet ist. Der Krümmungsabschnitt 34 ist dabei ausschließlich in einer Ebene gekrümmt, so dass der Krümmungsabschnitt 34 und der Linearabschnitt 33 in einer Ebene angeordnet sind, welche in der montierten Anordnung des Strafferantriebsrohres 32 parallel zu der Drehachse der Gurtspule 14 verläuft.

Die Gehäuseteile 30 und 31 bilden in der zusammengesetzten Stellung mit dem darin angeordneten Gurtaufroller 40 ein formstabiles Gehäuse, welches als das in der Figur 1 zu erkennende lasttragende Strukturteil in der Sitzstruktur genutzt werden kann.

Das lasttragende Strukturteil 2 mit der Profilschiene 7 oder den Gehäuseteilen 30 und 31 wurde gemäß der Darstellung in der Figur 1 in einer horizontalen Einbaugeometrie beschrieben, welche Vorteile hinsichtlich einer horizontalen Ausrichtung des Sicherheitsgurtes 12 in der Zuführung auf den Insassen aufweist. Eine horizontale Ausrichtung des Sicherheitsgurtes 12 in der Zuführung auf den Insassen ist insofern von Vorteil, da der Sicherheitsgurt 12 damit horizontal auf die Schulter den Insassen geführt werden kann, ohne nochmals umgelenkt zu werden. Alternativ kann das lasttragende Strukturteil 2 aber auch in einer vertikalen oder schrägen Ausrichtung an der Sitzstruktur angeordnet werden. Der Sicherheitsgurt 12 wird dann in einer schrägen Ausrichtung zugeführt oder mittels einer gesonderten Umlenkeinrichtung in die vorgesehene Zuführrichtung auf den Insassen umgelenkt. Ferner kann das Strukturteil 2 auch statt an einem oberen Rand der Rückenlehne auch an einer tieferen Stelle oder an einer Seite der Sitzstruktur der Rückenlehne angeordnet werden, sofern die Sitzstruktur oder die Zuführung des Sicherheitsgurtes 12 dies erfordert und/oder ermöglicht. Statt der Profilschiene 7 oder der Gehäuseteile 30 und 31 wäre es außerdem auch denkbar, ein rohrförmiges Strukturteil 2 mit einem kreisförmigen oder andersartigen Querschnitt vorzusehen, in welchem der Gurtaufroller 40 angeordnet und insbesondere stirnseitig eingeschoben wird.

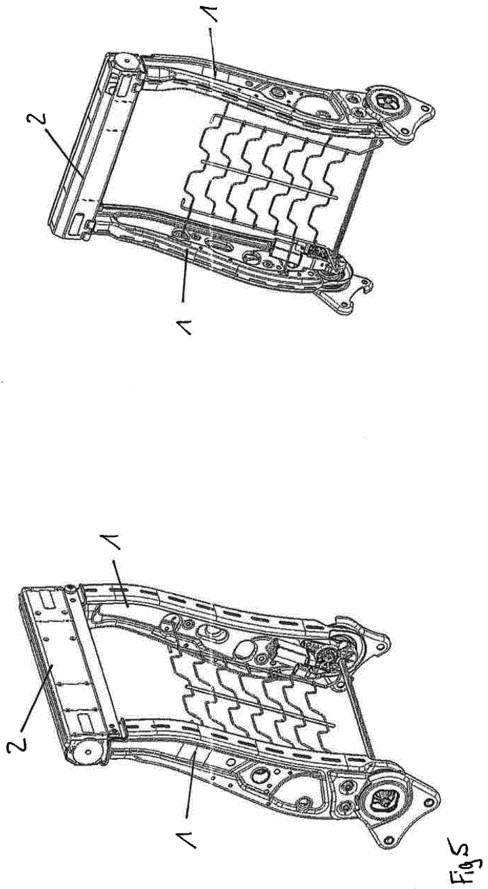

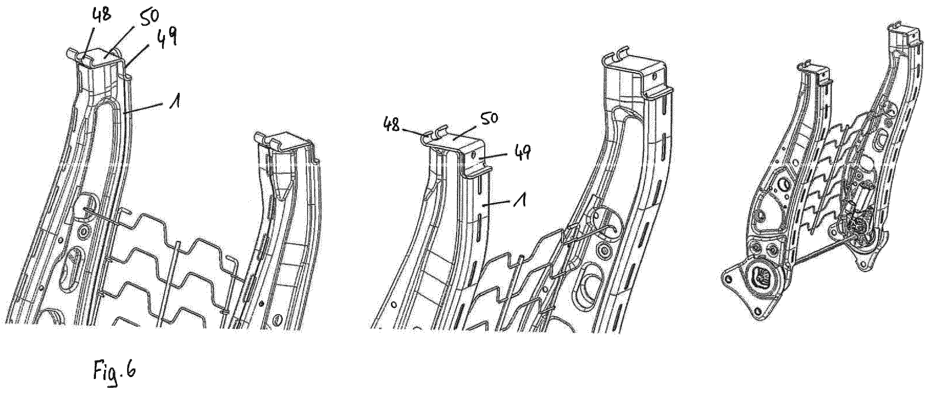

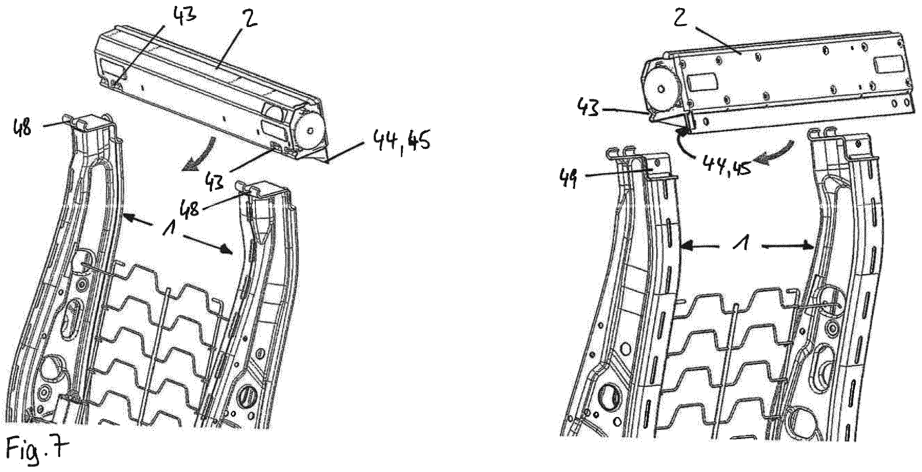

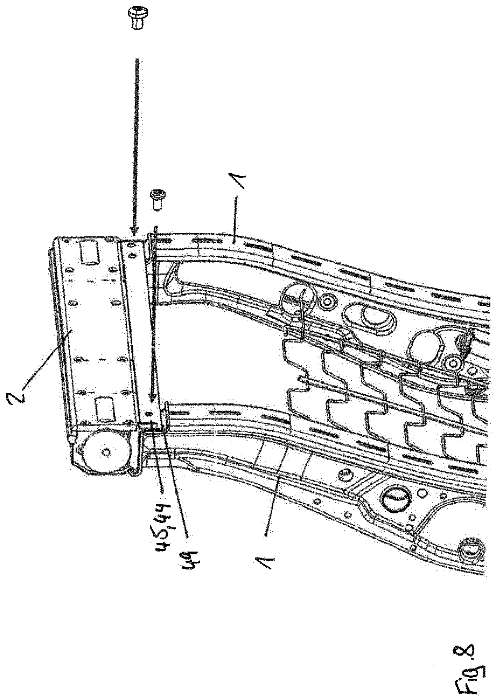

In der Figur 5 ist eine alternative Ausführungsform des lasttragenden Strukturteils 2 zu erkennen, welches mit zwei Längsstreben 1 der Rückenlehne verbunden ist und dadurch die Sitzstruktur der Rückenlehne versteift bzw. vervollständigt. An den in der Figur 6 zu erkennenden Stirnseiten der Längsstreben 1 ist jeweils ein Beschlagteil 50 angeordnet, welche jeweils ein paar Klauen 48 und eine Befestigungsfläche 49 aufweisen. An dem in der Figur 7 zu erkennenden Strukturteil 2 sind zwei treppenförmig versetzt angeordnete Widerlager 43 und 44 vorgesehen. Das in der Darstellung vordere obere Widerlager 43 ist in Form von zwei Vertiefungen in der Profilschiene 7 ausgebildet, welche so bemessen sind, dass die Klauen 48 des Beschlagteils 50 darin eingreifen können. Das in der Darstellung hintere untere Widerlager 44 ist in Form eines nach unten vorstehenden Befestigungsflansches der Profilschiene 7 ausgebildet, welcher so geformt und positioniert ist, dass er in der befestigten Stellung des Strukturteiles 2 an den Befestigungsflächen 49 der Beschlagteile 50 flächig anliegt. Zur Befestigung des Strukturteils 2 wird dieses so an die Längsstreben 1 angesetzt, dass die Klauen 48 zum Eingriff in die vorderen oberen Widerlager 43 gelangen, wodurch das Strukturteil 2 zunächst vorpositioniert wird. Das vordere obere Widerlager 43 und die eingreifenden Klauen 48 bilden dann ein Schwenklager, um welches das Strukturteil anschließend soweit verschwenkt wird, bis das hintere untere Widerlager 44 an der Befestigungsfläche 49 anliegt. Die abschließende Befestigung des Strukturteiles 2 erfolgt dann durch zwei in der Figur 8 zu erkennende Schrauben. Das hintere untere Widerlager 44 weist dazu in den äußeren Abschnitten jeweils eine Öffnung auf, in welche die Schrauben eingeführt und dann in korrespondierenden Gewinden der Längsstreben 1 verschraubt werden. Das Widerlager 44 in Form des Befestigungsflansches bildet damit zwei Befestigungsvorsprünge 45 aus, über welche das Strukturteil 2 mit den Längsstreben 1 verbunden ist. Das Strukturteil 2 ist dann in zwei treppenförmig versetzt angeordneten Widerlagern 43 und 44 befestigt.

In den Figuren 9 bis 15 ist eine erfindungsgemäße Ausführungsform des Strukturteils 2 zu erkennen. Das Strukturteil 2 weist eine in Form eines Ausschnittes in der Profilschiene 7 gebildete Öffnung 28 auf, durch welche sich der in der Figur 1 gezeigte Sicherheitsgurt 12 von der Gurtspule 14 nach außen hin erstreckt. Der Gurtaufroller 40 stützt sich dadurch bei der Ausübung von Zugkräften über den Sicherheitsgurt 12 in der Innenseite der Profilschiene 7 ab. Ferner wiest das Strukturteil 2 zwei Befestigungsansätze 6 in Form von zwei Befestigungsvorsprüngen 45 auf, welche so geformt sind, dass sie die in diesem Fall schlanken rechteckprofilförmigen Stirnseiten der Längsstreben 1 umfassen. Die Profilschiene 7 weist ferner an ihrer unteren, dem Insassen also der Anlehnfläche der Rückenlehne zugewandten Kante ein gekrümmte Schräge 53 auf, durch welche die Kante der Profilschiene 7 abgeflacht ist. Damit kann die Polsterung bzw. der Sitzaufbau flacher gestaltet werden, ohne dass dadurch der Sitzkomfort für den Insassen eingeschränkt wird.

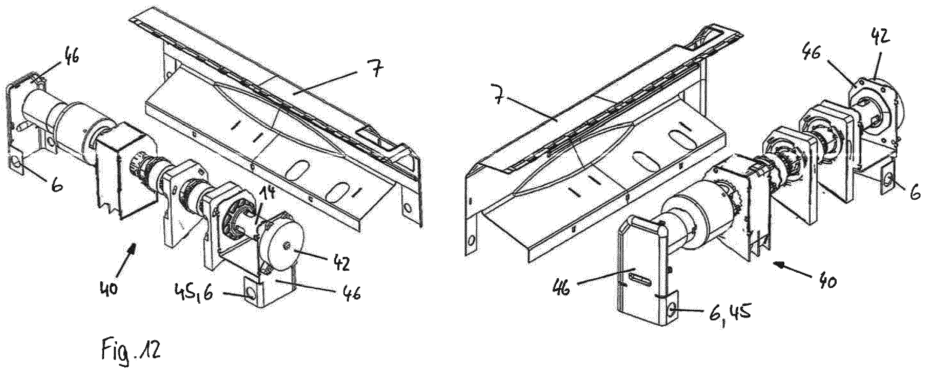

Wie in der Figur 12 zu erkennen ist, ist die Profilschiene 7 zu den Außenseiten hin jeweils durch eine Halteplatte 46 verschlossen, an welchen jeweils Befestigungsansätze 6 in Form der nach unten vorstehenden und seitlich abgewinkelten Befestigungsvorsprüngen 45 vorgesehen sind. Ferner dienen die Halteplatten 46 der Lagerung des Gurtaufrollers 40 und insbesondere der Gurtspule 14. Außerdem dient die in der Darstellung der Figur 12 rechte Halteplatte 46 zu einer Befestigung einer an der Außenseite angeordneten Federkassette 42, in welcher eine nicht dargestellte, die Gurtspule 14 in Aufwickelrichtung vorspannende Triebfeder angeordnet ist.

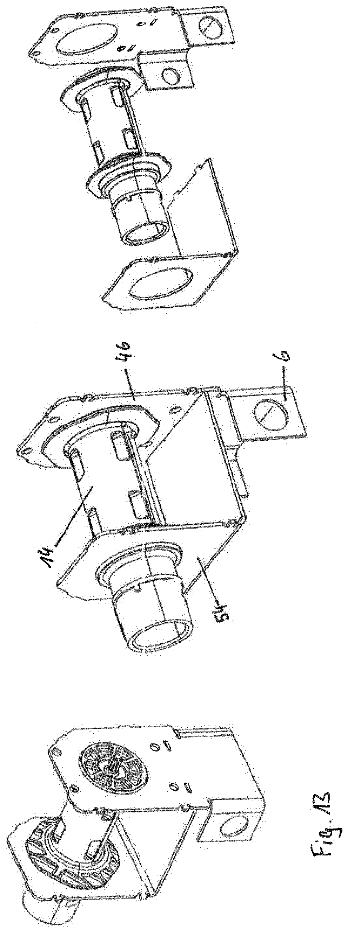

Die auf der Seite der Gurtspule 14 angeordnete Halteplatte 46 bildet zusammen mit einem L-förmigen Halteteil 54 einen im Querschnitt U-förmigen Rahmen, in dem die Gurtspule 14 gelagert ist, wie in der Figur 13 zu erkennen ist.

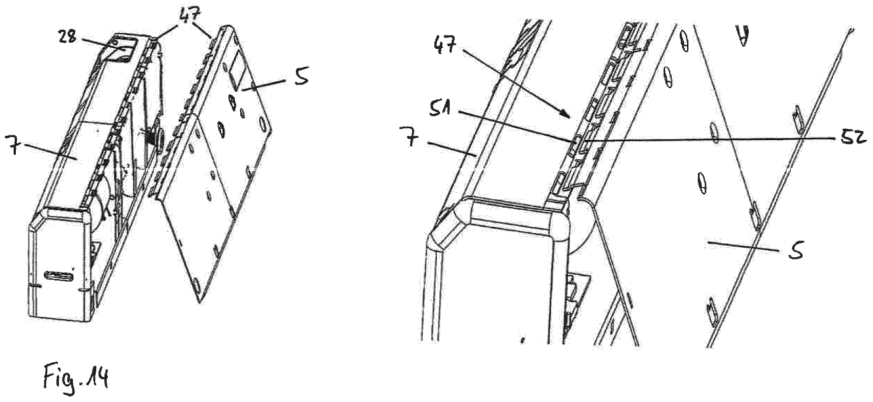

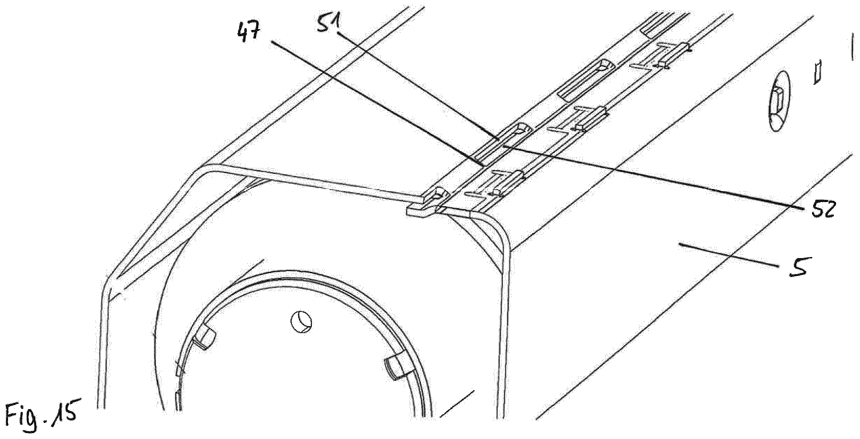

Ferner weist das Strukturteil 2 neben der Profilschiene 7 ein in den Figuren 14 und 15 zu erkennendes Abdeckteil 5 auf, welches die stirnseitigen Ränder der Schenkel der Profilschiene 7 überragt und dadurch die Profilschiene 7 zu einem geschlossenen Profil abdeckt bzw. vervollständigt. Das Abdeckteil 5 weist an einer seiner Randseiten eine Vielzahl von regelmäßig angeordneten Zähnen 52 auf, welche zusammen mit einer Vielzahl von regelmäßig angeordneten Fenstern 51 in einer der Randseiten eines Schenkels der Profilschiene 7 ein Scharnier 47 bilden. Zur Montage der Abdeckplatte 5 wird diese mit den Zähnen 52 in die Fenster 51 eingeführt und anschließend soweit an die Profilschiene 7 herangeschwenkt, bis sie die Profilschiene in der Befestigungsstellung vollständig verschließt.

## Patentansprüche

1. Lasttragendes Strukturteil (2) einer Sitzstruktur eines Fahrzeugsitzes, wobei
- das Strukturteil (2) einen Hohlraum (21) aufweist, in dem ein Gurtaufroller (40) angeordnet ist, wobei -das Strukturteil (2) an seinen Enden jeweils einen nach unten vorstehenden und seitlich abgewinkelten Befestigungsvorsprung (45) aufweist, mit denen das Strukturteil (2) an jeweils einer Längsstrebe (1) einer Rückenlehne der Sitzstruktur befestigbar ist, wobei
- das Strukturteil (2) die schlanken rechteckprofilförmigen Stirnseiten der Längsstreben (1) mit den Befestigungsvorsprüngen (45) umfasst, wobei
- das lasttragende Strukturteil (2) eine im Querschnitt U-förmige, einseitig offene Profilschiene (7) mit zwei gegenüberliegenden, sich von einer Basisfläche (10) erstreckenden Schenkeln (8,9) umfasst, und
- der Hohlraum (21) durch den Zwischenraum zwischen den gegenüber liegenden Schenkeln (8,9) gebildet ist, wobei
- die Profilschiene (7) zu den Außenseiten hin jeweils durch eine Halteplatte (46) verschlossen ist, an welchen jeweils Befestigungsansätze (6) in Form der Befestigungsvorsprüngen (45) zur Befestigung an der Sitzstruktur vorgesehen sind, wobei der Gurtaufroller (40) an der Halteplatte (46) gelagert ist..

2. Lastragendes Strukturteil (2) nach Anspruch 1, **dadurch gekennzeichnet, dass**
- der Hohlraum (21) eine Öffnung (28) aufweist, durch die ein auf dem Gurtaufroller (40) aufwickelbarer Sicherheitsgurt (12) herausgeführt wird.

3. Lasttragendes Strukturteil (2) nach Anspruch 2, **dadurch gekennzeichnet, dass**
- die Öffnung (28) durch einen Ausschnitt in der Profilschiene (7) gebildet ist.

4. Lasttragendes Strukturteil (2) nach einem der Ansprüche 1 bis 3, **dadurch gekennzeichnet, dass**
- die Schenkel (8,9) der Profilschiene (7) ausgehend von der Basisfläche (10) eine unterschiedliche Höhe aufweisen.

5. Lasttragendes Strukturteil (2) nach Anspruch 4, **dadurch gekennzeichnet, dass**
- der Schenkel (8,9) mit der kleineren Höhe in der vorgesehenen Einbaustellung des Strukturteils (2) einer Sitzfläche des Fahrzeugsitzes zugewandt ist.

6. Lasttragendes Strukturteil (2) nach einem der Ansprüche 1 bis 5, **dadurch gekennzeichnet, dass**
- der Gurtaufroller (40) in einem sich zwischen den Schenkeln (8,9) der Profilschiene (7) abstützenden Steg (15,16,17,18,19,20) gelagert ist.

7. Lasttragendes Strukturteil (2) nach Anspruch 6, **dadurch gekennzeichnet, dass**
- wenigstens ein zweiter sich zwischen den Schenkeln (8,9) der Profilschiene (7) abstützender Steg (15,16,17,18,19,20) vorgesehen ist, welcher zu dem ersten Steg (15,16,17,18,19,20) beabstandet ist.

8. Lasttragendes Strukturteil (2) nach einem der Ansprüche 1 bis 7, **dadurch gekennzeichnet, dass**
- der Gurtaufroller (40) eine um eine Drehachse (A) drehbar gelagerte Gurtspule (14) aufweist, und
- der Gurtaufroller (40) derart angeordnet ist, dass die Drehachse (A) der Gurtspule (14) parallel zu der Längsrichtung der Profilschiene (7) ausgerichtet ist.

9. Lasttragendes Strukturteil (2) nach einem der Ansprüche 1 bis 8, **dadurch gekennzeichnet, dass**
- die Profilschiene (7) durch ein Abdeckteil (5) verschlossen ist, welches die freien stirnseitigen Ränder der Schenkel (8,9) überdeckt.

10. Lasttragendes Strukturteil (2) nach Anspruch 9, **dadurch gekennzeichnet, dass**
- das Abdeckteil (5) mit wenigstens einem freien Rand eines Schenkels (8,9) über ein Scharnier (47) schwenkbar verbunden ist.

11. Lasttragendes Strukturteil (2) nach einem der Ansprüche 1 bis 10, **dadurch gekennzeichnet, dass**
- an der Außenseite der Halteplatte (46) eine Federkassette (42) des Gurtaufrollers gehalten ist.

12. Lasttragendes Strukturteil (2) nach einem der vorangegangenen Ansprüche, **dadurch gekennzeichnet, dass**
- das Strukturteil (2) aus einem Metallblech gebildet ist.

13. Lasttragendes Strukturteil (2) nach einem der vorangegangenen Ansprüche, **dadurch gekennzeichnet, dass**
- das Strukturteil (2) aus einem faserverstärkten Kunststoffteil gebildet ist.

14. Lasttragendes Strukturteil (2) nach einem der vorangegangenen Ansprüche, **dadurch gekennzeichnet, dass**
- das Strukturteil (2) wenigstens im Bereich des Hohlraumes (21) eine oder mehrere Versteifungsrippen aufweist.

15. Lasttragendes Strukturteil (2) nach einem der vorangegangenen Ansprüche, **dadurch gekennzeichnet, dass**
- das Strukturteil (2) zwei treppenförmig versetzt angeordnete Widerlager (43,44) zur Befestigung an der Sitzstruktur aufweist.

16. Lasttragendes Strukturteil (2) nach Anspruch 15, **dadurch gekennzeichnet, dass**
- eines der Widerlager (43,44) als ein Schwenklager und das andere Widerlager (43,44) als ein Befestigungsflansch ausgebildet ist.

17. Lasttragendes Strukturteil (2) nach einem der vorangegangenen Ansprüche, **dadurch gekennzeichnet, dass** die Lastaufnahme des Strukturteils (2) entlang seiner Längsausrichtung abnimmt.

## Claims

1. Load-bearing structural part (2) of a seat structure of a vehicle seat, wherein
- the structural part (2) has a cavity (21) in which a belt retractor (40) is arranged, wherein
- the structural part (2) has, at each of the ends thereof, a fastening projection (45) which projects downward and is angled at the side, by means of which the structural part (2) can be fastened to a relevant longitudinal strut (1) of a backrest of the seat structure, wherein
- the structural part (2) comprises the slender rectangular-profile-shaped end faces of the longitudinal struts (1) having the fastening projections (45), wherein
- the load-bearing structural part (2) comprises a profile rail (7) which is U-shaped in cross section and open on one side and has two opposite legs (8, 9) extending from a base surface (10), and
- the cavity (21) is formed by the intermediate space between the opposite legs (8, 9), wherein
- the profile rail (7) is closed on the outer sides by a holding plate (46) in each case, on which fastening elements (6) in the form of the fastening projections (45) are provided for fastening to the seat structure, wherein the belt retractor (40) is mounted on the holding plate (46).

2. Load-bearing structural part (2) according to claim 1, **characterized in that**
- the cavity (21) has an opening (28) through which a seat belt (12) which can be wound on the belt retractor (40) is guided out.

3. Load-bearing structural part (2) according to claim 2, **characterized in that**
- the opening (28) is formed by a cutout in the profile rail (7).

4. Load-bearing structural part (2) according to any of claims 1 to 3, **characterized in that**
- the legs (8, 9) of the profile rail (7) have a different height starting from the base surface (10).

5. Load-bearing structural part (2) according to claim 4, **characterized in that**
- the leg (8, 9) having the smaller height faces a seat surface of the vehicle seat in the intended installation position of the structural part (2).

6. Load-bearing structural part (2) according to any of claims 1 to 5,
**characterized in that**
- the belt retractor (40) is mounted in a web (15, 16, 17, 18, 19, 20) which is supported between the legs (8, 9) of the profile rail (7).

7. Load-bearing structural part (2) according to claim 6, **characterized in that**
- at least one second web (15, 16, 17, 18, 19, 20) which is supported between the legs (8, 9) of the profile rail (7) and is spaced apart from the first web (15,16, 17, 18, 19, 20) is provided.

8. Load-bearing structural part (2) according to any of claims 1 to 7,
**characterized in that**
- the belt retractor (40) has a belt reel (14) mounted rotatably about an axis of rotation (A), and
- the belt retractor (40) is arranged such that the axis of rotation (A) of the belt reel (14) is aligned in parallel with the longitudinal direction of the profile rail (7).

9. Load-bearing structural part (2) according to any of claims 1 to 8,
**characterized in that**
- the profile rail (7) is closed by a cover part (5) which covers the free endface edges of the legs (8, 9).

10. Load-bearing structural part (2) according to claim 9, **characterized in that**
- the cover part (5) is swivelably connected to at least one free edge of a leg (8, 9) by means of a hinge (47).

11. Load-bearing structural part (2) according to any of claims 1 to 10,
**characterized in that**
- a spring cassette (42) of the belt retractor is held on the outside of the holding plate (46).

12. Load-bearing structural part (2) according to any of the preceding claims, **characterized in that**
- the structural part (2) is formed from a metal sheet.

13. Load-bearing structural part (2) according to any of the preceding claims, **characterized in that**
- the structural part (2) is formed from a fiber-reinforced plastics part.

14. Load-bearing structural part (2) according to any of the preceding claims, **characterized in that**
- the structural part (2) has one or more stiffening ribs at least in the region of the cavity (21).

15. Load-bearing structural part (2) according to any of the preceding claims, **characterized in that**
- the structural part (2) has two abutments (43, 44) arranged at an offset from one another in the shape of steps, for fastening to the seat structure.

16. Load-bearing structural part (2) according to claim 15, **characterized in that**
- one of the abutments (43, 44) is designed as a swivel bearing and the other abutment (43, 44) as a fastening flange.

17. Load-bearing structural part (2) according to any of the preceding claims, **characterized in that** the load-bearing capacity of the structural part (2) decreases along its longitudinal orientation.

## Revendications

1. Partie structurale (2) porteuse de charge d'une structure de siège d'un siège de véhicule, dans laquelle
- la partie structurale (2) présente une cavité (21) dans laquelle est agencé un enrouleur de ceinture (40), dans laquelle
- la partie structurale (2) présente au niveau de ses extrémités respectivement une saillie de fixation (45) coudée latéralement et en saillie vers le bas, avec lesquelles la partie structurale (2) peut être fixée à respectivement une entretoise longitudinale (1) d'un dossier de la structure de siège, dans laquelle
- la partie structurale (2) comprend les côtés frontaux minces en forme de profilés rectangulaires des entretoises longitudinales (1) avec les saillies de fixation (45), dans laquelle
- la partie structurale (2) porteuse de charge comprend un rail profilé (7) ouvert sur un côté, en forme de U en section transversale et comportant deux branches (8, 9) opposées s'étendant depuis une surface de base (10), et
- la cavité (21) est formée par l'espace intermédiaire entre les branches (8, 9) opposées, dans laquelle
- le rail profilé (7) est fermé vers les côtés extérieurs respectivement par une plaque de retenue (46), sur laquelle sont prévus respectivement des appendices de fixation (6) sous la forme des saillies de fixation (45) pour la fixation à la structure de siège, dans laquelle l'enrouleur de ceinture (40) est monté sur la plaque de retenue (46).

2. Partie structurale (2) porteuse de charge selon la revendication 1, **caractérisée en ce que**
- la cavité (21) présente une ouverture (28) à travers laquelle une ceinture de sécurité (12) pouvant être enroulée sur l'enrouleur de ceinture (40) est guidée vers l'extérieur.

3. Partie structurale (2) porteuse de charge selon la revendication 2, **caractérisée en ce que**
- l'ouverture (28) est formée par une découpe dans le rail profilé (7).

4. Partie structurale (2) porteuse de charge selon l'une des revendications 1 à 3, **caractérisée en ce que**
- les branches (8, 9) du rail profilé (7) présentent des hauteurs différentes à partir de la surface de base (10).

5. Partie structurale (2) porteuse de charge selon la revendication 4, **caractérisée en ce que**
- la branche (8, 9) comportant la hauteur la plus petite est tournée vers une surface d'assise du siège de véhicule dans la position de montage prévue de la partie structurale (2).

6. Partie structurale (2) porteuse de charge selon l'une des revendications 1 à 5, **caractérisée en ce que**
- l'enrouleur de ceinture (40) est monté dans une entretoise (15, 16, 17, 18, 19, 20) s'appuyant entre les branches (8, 9) du rail profilé (7).

7. Partie structurale (2) porteuse de charge selon la revendication 6, **caractérisée en ce que**
- au moins une seconde entretoise (15, 16, 17, 18, 19, 20) s'appuyant entre les branches (8, 9) du rail profilé (7) est prévue, laquelle est espacée de la première entretoise (15, 16, 17, 18, 19, 20).

8. Partie structurale (2) porteuse de charge selon l'une des revendications 1 à 7, **caractérisée en ce que**
- l'enrouleur de ceinture (40) présente une bobine de ceinture (14) montée de manière à pouvoir tourner autour d'un axe de rotation (A), et
- l'enrouleur de ceinture (40) est disposé de telle sorte que l'axe de rotation (A) de la bobine de ceinture (14) est orienté parallèlement à la direction longitudinale du rail profilé (7).

9. Partie structurale (2) porteuse de charge selon l'une des revendications 1 à 8, **caractérisée en ce que**
- le rail profilé (7) est fermé par une partie de recouvrement (5) qui recouvre les bords libres côté frontal des branches (8, 9).

10. Partie structurale (2) porteuse de charge selon la revendication 9, **caractérisée en ce que**
- la partie de recouvrement (5) est reliée de manière à pouvoir pivoter à au moins un bord libre d'une branche (8, 9) par l'intermédiaire d'une charnière (47).

11. Partie structurale (2) porteuse de charge selon l'une des revendications 1 à 10, **caractérisée en ce que**
- une cassette à ressort (42) de l'enrouleur de ceinture est maintenue sur le côté extérieur de la plaque de maintien (46).

12. Partie structurale (2) porteuse de charge selon l'une des revendications précédentes, **caractérisée en ce que**
- la partie structurale (2) est formée d'une tôle métallique.

13. Partie structurale (2) porteuse de charge selon l'une des revendications précédentes, **caractérisée en ce que**
- la partie structurale (2) est formée d'une partie en matière plastique renforcée de fibres.

14. Partie structurale (2) porteuse de charge selon l'une des revendications précédentes, **caractérisée en ce que**
- la partie structurale (2) présente, au moins dans la zone de la cavité (21), une ou plusieurs nervures de raidissement.

15. Partie structurale (2) porteuse de charge selon l'une des revendications précédentes, **caractérisée en ce que**
- la partie structurale (2) présente deux butées (43, 44) agencées de manière à être décalées en forme d'escalier pour la fixation à la structure de siège.

16. Partie structurale (2) porteuse de charge selon la revendication 15, **caractérisée en ce que**
- l'une des butées (43, 44) est réalisée comme un palier pivotant et l'autre butée (43, 44) est réalisée comme une bride de fixation.

17. Partie structurale (2) porteuse de charge selon l'une des revendications précédentes, **caractérisée en ce que** la reprise de charge de la partie structurale (2) diminue le long de son orientation longitudinale.
